# EUROPEAN PATENT APPLICATION

(11) **EP 1 646 140 A2**
(43) Date of publication of application: **12.04.2006**
(21) Application number: 05256206.3
(22) Date of filing: 04.10.2005
(51) Int. Cl.: H02P 25/18

(54) **Electrical equipment**

(30) Priority: 06.10.2004 JP 2004293521
(71) Applicant: MATSUSHITA ELECTRIC INDUSTRIAL CO., LTD., Kadoma-shi, Osaka 571-8501 (JP)
(72) Inventor: Tuduki, Sinichi, Higashiomi-shi shiga 527-0038 (JP); Fujiwara, Tosiaki, Higashiomi-shi Shiga 527-0092 (JP); Murata, Yoshitaka, Hikone-chi Shiga 521-1135 (JP); Fukusima, Masaiti, Omihachiman-shi Shiga 523-0896 (JP)
(74) Representative: Crawford, Andrew Birkby

(57) **Abstract**

Handy electrical equipment, the manufacturing cost of which is low, is provided in which an electric motor is controlled so that a higher harmonic current can be in a range of a predetermined standard value and simultaneously vibration generated from the electric motor is suppressed. A plurality of taps (1c) to (1h) are drawn out from stators (1a), (1b) of electric motor (1). When the taps are switched, an input to electric motor (1) is switched. When common phase control is conducted in it, vibration generated from electric motor (1) is suppressed. When the tap is switched in a region in which a higher harmonic current is low, a level of the higher harmonic current is reduced in all regions.

## Description

### TECHNICAL FIELD

The present invention relates to electrical equipment such as a vacuum cleaner for household use.

### BACKGROUND ART

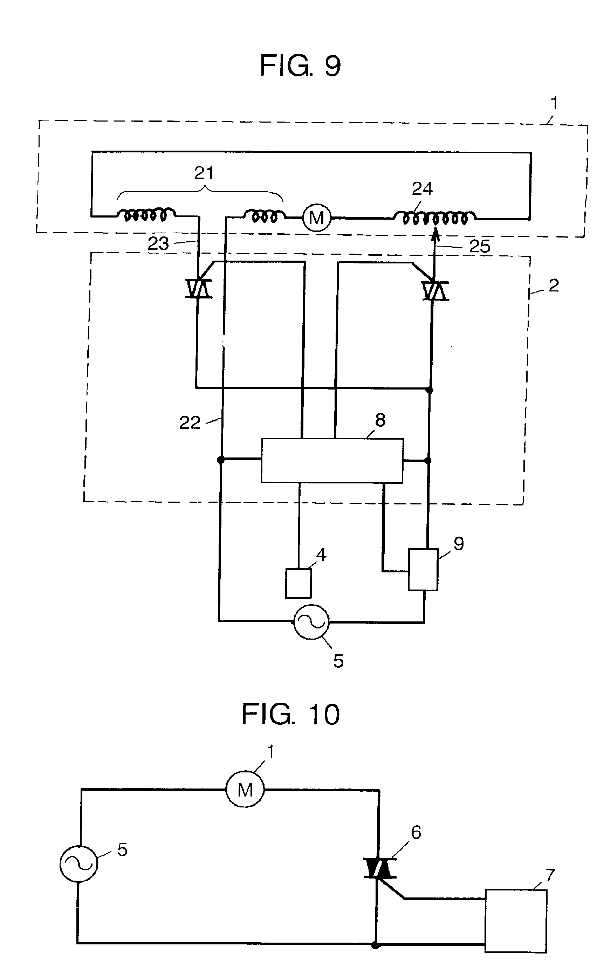

An example of the conventional vacuum cleaner is shown in Fig. 10. Fig. 10 is a view showing an example of the conventional vacuum cleaner disclosed in the official gazette of JP-A-63-274396 which is referred to as Reference 1 hereinafter. This type vacuum cleaner includes electric blower 1, commercial power source 5 and bi-directional thyristor 6 for driving electric blower 1. In order to change a sucking force of the vacuum cleaner body, the vacuum cleaner further includes bi-directional thyristor drive section 7 for changing a phase angle of bi-directional thyristor 6.

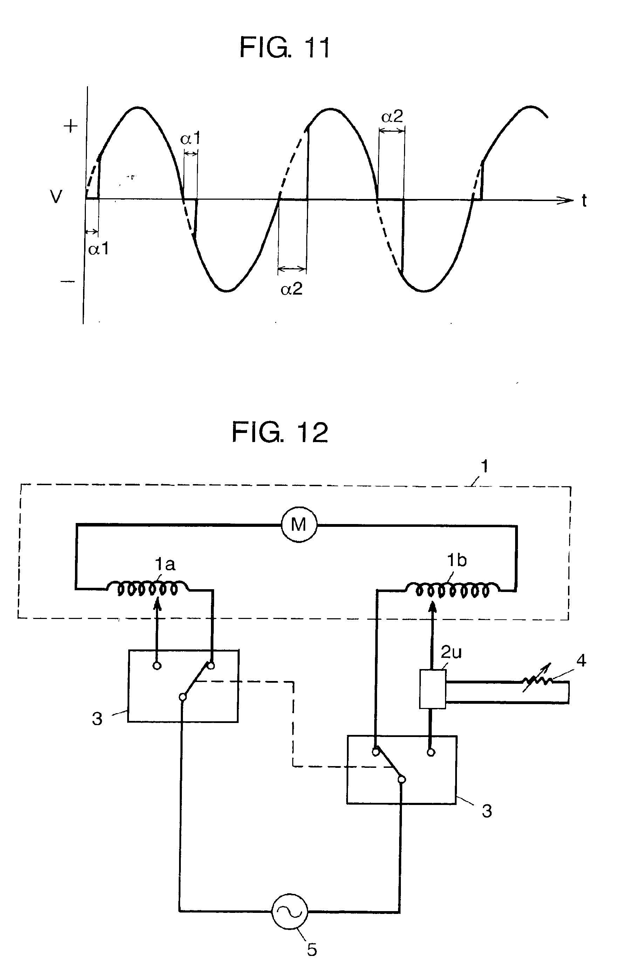

Fig. 11 is a diagram showing voltage impressed upon electric blower 1 in the circuit structure shown in Fig. 10. As can be seen in Fig. 11, phase angle α1, which is relatively small, and phase angle α2, which is larger than phase angle α1, are alternately changed each cycle and impressed upon bi-directional thyristor 6. At this time, the effective voltage impressed upon electric blower 1 is substantially in the middle of phase angle α1 and phase angle α2. Therefore, the rotating speed can be adjusted. When electric blower 1 is driven, two types of higher harmonic currents are generated. One is a higher harmonic current generated at phase angle α1, and the other is a higher harmonic current generated at phase angle α2. The level of the higher harmonic current generated at each phase angle is half. Therefore, the level of the higher harmonic current is decreased as a whole.

Fig. 12 is a view showing another conventional example disclosed in the official gazette of JP-A-7-67816 which is referred to as Reference 2 hereinafter. This type vacuum cleaner includes electric blower 1, stator 1a, stator 1b, electric blower drive section 2u, switching section 3, input selecting section 4 and commercial power source 5.

In this circuit structure, taps drawn out from stators 1a, 1b are selected by switching section 2. Two inputs, one is a high input and the other is a low input, can be selected by these taps. When the tap on the low input side is selected, a low intensity of current flows in the electric blower. Therefore, an intensity of higher harmonic current is decreased, and it becomes possible to change an input by controlling the phase and the higher harmonic current can be put on the satisfying level at the same time. At the tap on the high input side, the higher harmonic current is put on a level, which can not satisfy the predetermined standard. Therefore, only the maximum input is used so as to input a high intensity of current. Concerning the input to the conventional vacuum cleaner, a difference between the inputs of the low input side and the high input side is so small that special control is not needed when operation is conducted by using the tap on the high input side.

However, in the structure of Reference 1, in the case where electric blower 1 is driven, voltage impressed upon electric blower 1 is changed each cycle. Therefore, the problem is caused that electric blower 1 is driven while vibration and noise are being generated. Vibration is generated from the vacuum cleaner body which is controlled as described above. The thus generated vibration is transmitted to a user. Accordingly, the user feels difficulties in the use of the vacuum cleaner. In the case where the performance of the vacuum cleaner is going to be enhanced by inputting a high intensity of current to electric blower 1, the intensity of current flowing in electric blower 1 is increased in accordance with the increase in the input of electric blower 1. According to the increase in the current, an intensity of higher harmonic current is also increased. In this case, in order to decrease the level of the higher harmonic current, it is necessary to increase a phase difference between phase angle α1 and phase angle α2 in the control method described before. As phase difference is made larger, vibration and noise generated from electric blower 1 are increased. Accordingly, in the case where the higher harmonic current is suppressed in the predetermined range by the above control, the increase in the input of electric blower 1 is limited.

In the circuit structure shown in Reference 2 described before in which switching is conducted by selecting the tap from the low input to the high input, the input fluctuates greatly. Therefore, an intensity of noise generated from electric blower 1 greatly fluctuates, and a user and persons in the periphery of the user feel a sense of incongruity.

### DISCLOSURE OF THE INVENTION

The present invention has been accomplished to overcome the inconvenience described above. It is an object of the present invention to provide user-friendly electrical equipment in which an electric motor of an electric blower is controlled so as to suppress a higher harmonic current to be in a range of the predetermined standard and at the same time, vibration and noise at the time of switching generated from the electric motor are suppressed and further the manufacturing cost is reduced.

In order to overcome the above conventional difficulties, according to the present invention, a plurality of taps are drawn out from the stator of an electric motor, and an input of the electric motor is switched by switching the taps. When phase control is commonly conducted in this case, vibration generated from the electric motor is suppressed. Further, when the tap is switched in a region of a low intensity of higher harmonic current by conducting phase control on the high input side, the level of the higher harmonic current is reduced in all the regions , so that the higher harmonic current can be suppressed in a predetermined standard range.

According to the present invention, when the tap is switched over, the higher harmonic current can be satisfactorily suppressed in the predetermined standard range, and at the same time, vibration generated from the electricmotor can be excluded. It is possible to soften a sound generated at the time of switching the tap. Therefore, it is possible to cope with operation in which a high intensity of current is inputted into the electric motor.

The specific electrical equipment of the present invention includes an electric motor, from the stator of which a plurality of intermediate taps are drawn out, and when the taps are switched, the input is variably controlled. The specific electrical equipment of the present invention also includes a drive section for driving the electric motor for each tap and a switching section for selecting each tap. The drive section is composed so that an input of the electric motor can be arbitrarily changed in the input region determined by a pair of taps which have been selected by the switching section. Therefore, in all regions in which the electric motor can output power, an intensity of the current to be impressed upon the electric motor is changed.

In another electrical equipment of the present invention, in each input region selected by switching the taps, the drive section is operated in the input region in which the higher harmonic current flowing in the electric motor is in the predetermined standard range, and in the input region in which the higher harmonic current exceeds the predetermined standard, operation is conducted in another input region by switching the taps.

In still another electrical equipment of the present invention, in each input region selected by switching the taps, the drive section changes stepwise an intensity of the input impressed upon the electric motor.

In still another electrical equipment of the present invention, in the case where an intensity of the input impressed upon the electric motor is changed by phase control in the input region selected by switching the taps, the drive section skips an impression of the input upon the electrical equipment only in an input region in which the higher harmonic current can not satisfy the predetermined standard.

In still another electrical equipment of the present invention, in the case where a value of the input to the electric motor is changed by phase control in the input region selected by switching the taps, the drive section switches the taps in the input region in which the higher harmonic current can not satisfy the predetermined standard and selects another input region so as to operate the electric motor.

Still another electrical equipment of the present invention includes a current detecting section for reading and detecting a current flowing into the electric motor in the input region selected by the tap switching section and also includes an adjusting section for conducting an adjustment so that a difference between the inputs, which is generated by the fluctuation of the input regions at the time of switching the taps, can be minimized. When the adjustment is conducted by this adjusting section, the fluctuation of the input impressed upon the electric motor can be suppressed to an allowable range.

Still another electric motor of the present invention includes a current detecting section, and the breaking of wire of the electric motor is judged by an intensity of the detected current.

Still another electrical equipment of the present invention includes an electric motor in which a plurality of windings are provided on one of the stators and connected to a plurality of taps, and when the taps are switched, an intensity of the input is changed. Still another electrical equipment of the present invention includes a drive section for driving an electric motor for each tap and also includes a switching section for switching the taps. The drive section operates the electric motor in the input region, in which the higher harmonic current flowing in the electric motor is in the predetermined standard, in each input region range, and also operates the electric motor in another input region by switching the tap in an input region in which the higher harmonic current exceeds the predetermined standard.

Still another electrical equipment of the present invention changes stepwise an intensity of the input impressed upon the electric motor in each input region selected by switching the taps.

Still another electrical equipment of the present invention includes a phase control section. In the case where an intensity of the input impressed upon the electric motor is changed by phase control in an input region selected by switching the taps, the drive section makes an impression of the input skip in an input region in which the higher harmonic current flowing in the electric motor can not satisfy the predetermined standard. That is, the impression of the input is stopped in this input region.

Still another electrical equipment of the present invention includes a phase control section. In the case where an intensity of the input impressed upon the electric motor is changed by phase control in an input region selected by switching the taps, in a region in which the higher harmonic current can not satisfy the predetermined standard, the tap is switched in the input region so as to select another input region and the electric motor is operated.

Still another electrical equipment of the present invention includes a current detecting section for reading and detecting a current flowing into the electric motor in the input region selected by the tap switching section and also includes an adjusting section for conducting an adjustment so that a difference between the inputs, which is generated by the fluctuation of the input regions at the time of switching the tap, can be adjusted. When the adjustment is conducted by this adjusting section, the fluctuation can be suppressed.

Still another electric motor of the present invention includes a current detecting section, and the breaking of wire of the electric motor is judged by an intensity of the current detected by the current detecting section.

### BRIEF DESCRIPTION OF THE DRAWINGS

Fig. 1 is a circuit block diagram of Embodiment 1 of the present invention.
Fig. 2 is a table showing an input region of the electric blower of Embodiment 1 for each tap.
Fig. 3 is a circuit diagram of Embodiment 1 of the present invention.
Fig. 4 is a phase-input characteristic diagram showing a relation between the phase of voltage, which is impressed upon the electric blower of Embodiment 1 of the present invention, and the input, wherein the tap is used as a parameter in the diagram.
Fig. 5 is a phase-higher harmonic current characteristic diagram showing a relation between the phase of the input (voltage), which is impressed upon the electric blower of Embodiment 1 of the present invention, and the higher harmonic current flowing in the electric blower.
Fig. 6 is a phase-higher harmonic current characteristic diagram showing a relation between the phase of the voltage, which is impressed upon che electric blower of Embodiment 1 of the present invention, and, the higher harmonic current flowing in the electric blower, wherein the tap is used as a parameter.
Fig. 7 is a circuit block diagram of Embodiment 2 of the present invention.
Fig. 8 is a phase-input characteristic diagram showing a relation between the phase of the voltage, which is impressed upon the electric blower of Embodiment 2 of the present invention, and the input impressed upon the electric blower, wherein this diagram is shown according to a state of switching the taps.
Fig. 9 is a circuit block diagram of Embodiment 3 of the present invention.
Fig. 10 is a circuit block diagram of the conventional vacuum cleaner.
Fig. 11 is a wave-form diagram of voltage impressed upon the electric blower of the conventional vacuum cleaner.
Fig. 12 is a circuit block diagram of the conventional vacuum cleaner.

### DESCRIPTION OF REFERENCE NUMERALS AND SIGNS

- 1: Electric blower (Electric motor)
- 1a to 1b: Stator
- 1c to 1h: Tap for taking out input
- 2: Drive section
- 2i to 2n: Switch
- 2o to 2q: Drive section for switching
- 2r to 2u: Electric blower drive section
- 3: Switching section
- 4: Input selecting section
- 5: Commercial power source
- 6: Bi-directional thyristor
- 7: Bi-directional thyristor drive section
- 8: Control section
- 9: Current detecting section

### BEST MODE FOR CARRYING OUT THE INVENTION

A vacuum cleaner is taken up as an example of the electrical equipment of the present invention, and explanations will be made into the vacuum cleaner as follows.

### (EMBODIMENT 1)

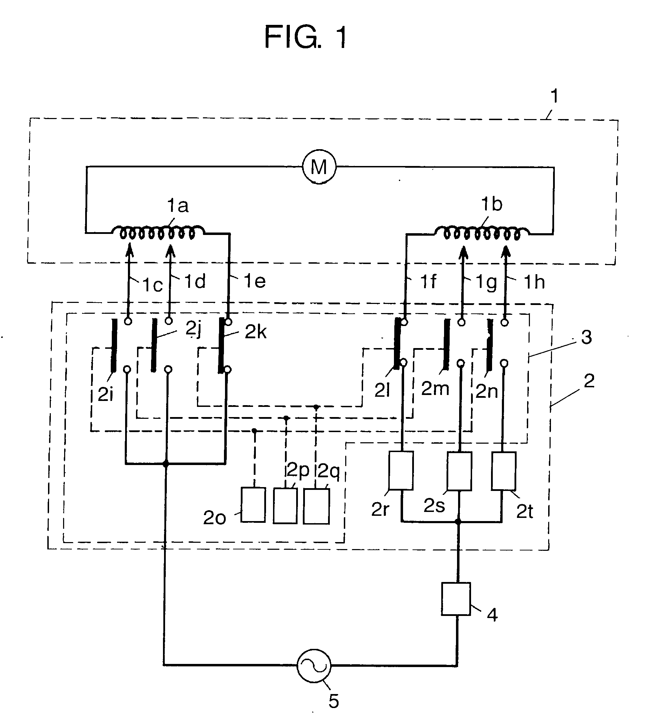

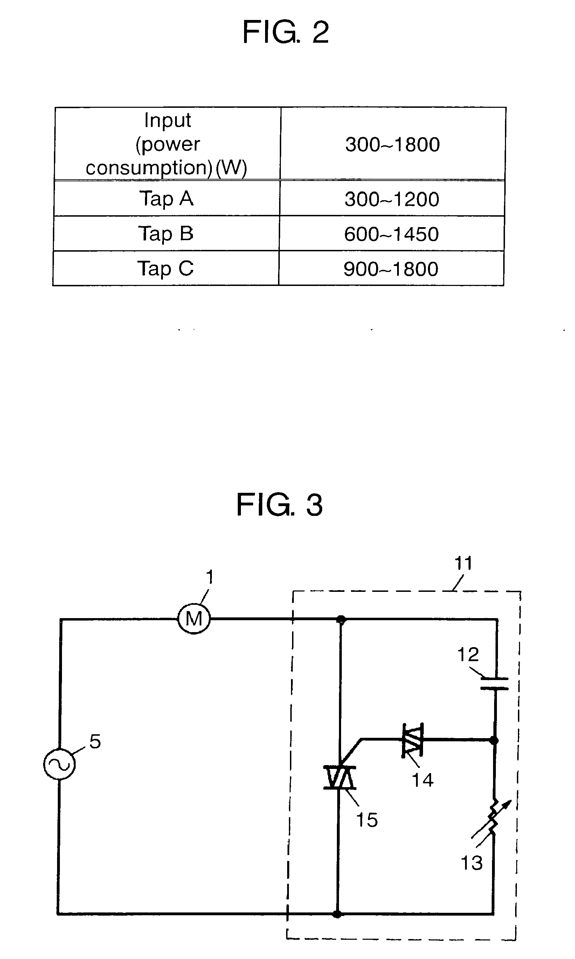

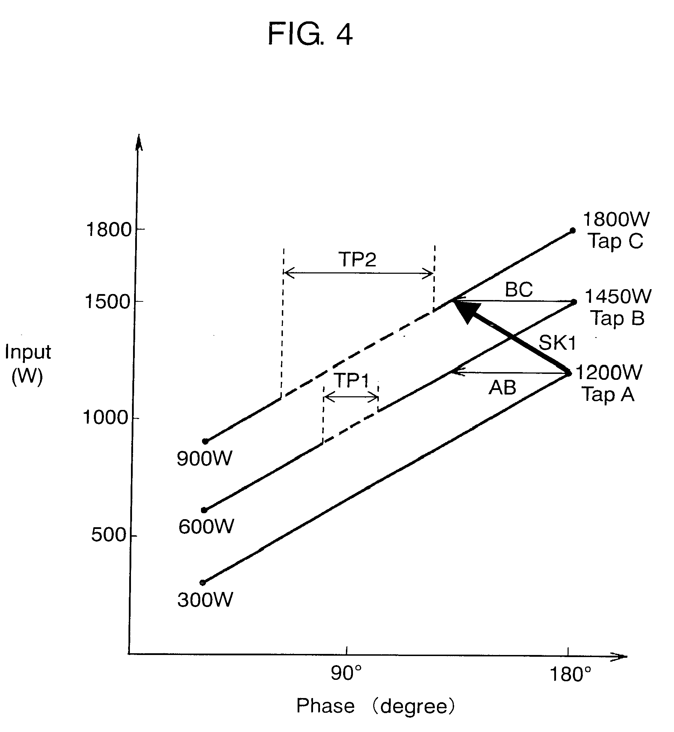

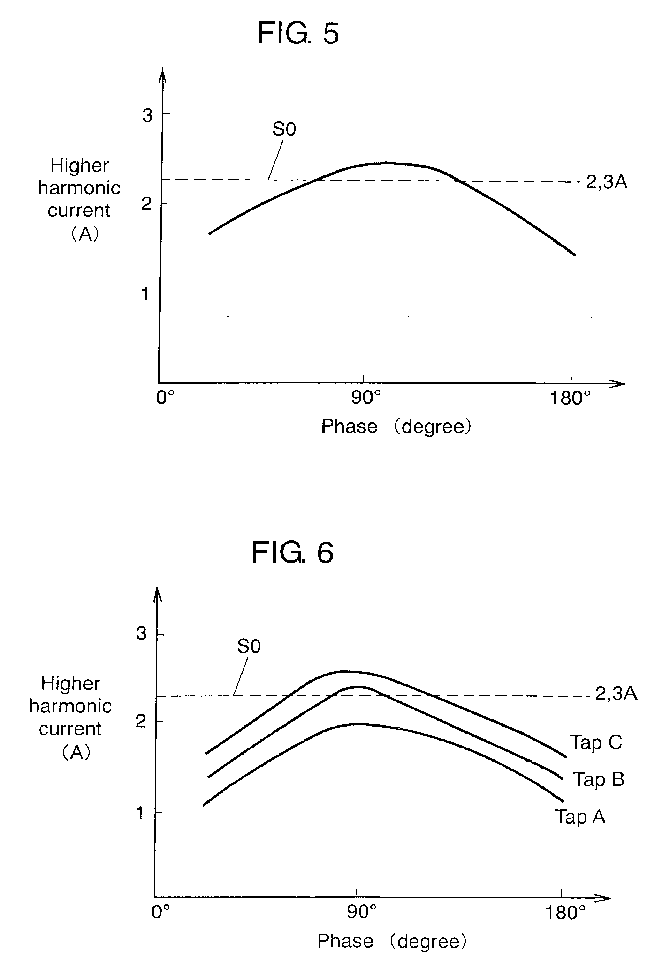

Referring to Figs. 1 to 6, Embodiment 1 will be explained below. Fig. 1 is a circuit block diagram of the vacuum cleaner, Fig. 2 is a table showing an input region of the electric blower, Fig. 3 is a circuit diagram for driving the electric blower, Fig. 4 is a characteristic diagram showing a relation between the phase of voltage, which is impressed upon the electric blower at the time of controlling the electric blower, and the value of the higher harmonic current, Fig. 5 is a characteristic diagram showing a relation between the phase of voltage, which is impressed upon the electric blower at the time of using the electric blower capable of switching the Laps, and the higher harmonic current, and Fig. 6 is a characteristic diagram showing a relation between the phase of voltage, which is impressed upon the electric blower, and the higher harmonic current flowing in the electric blower.

In Fig. 1, electric blower 1, which is employed as electrical equipment, sucks dust. In electric blower 1, intermediate taps 1c, 1d, 1e, 1f, 1g, 1h are drawn out from the middle portions of the windings wound round stators 1a, 1b. Drive section 2 drives electric blower 1. Switching section 3 switches taps 1c to 1h provided in electric blower 1. Switching section 3 is provided with switches 2i, 2j, 2k, 21, 2m, 2n for switching taps 1c to 1h. Switching drive section 2o, 2p, 2q drive switches 2j to 2n. Drive section 2 includes electric blower drive sections 2r, 2s, 2t for driving electric blower 1 with respect to taps 1f to 1h provided in the electric blower 1. Input selecting section 4 changes an input to electric blower 1. Further, commercial power source 5 is prepared.

Concerning the vacuum cleaner composed as described above, its operation will be explained as follows.

A plurality of taps respectively corresponding to the high input, the intermediate input and the low input are drawn out from the intermediate portions of the windings of stators 1a, 1b of electric blower 1. When a pair of the taps are selected, an input of electric blower 1 is determined. In electric blower 1 shown in Fig. 1, when taps 1c and 1h are selected, which will be referred to as tap A hereinafter, a low input is inputted into the electric blower. When taps 1d and 1g are selected, which will be referred to as tap B hereinafter, an intermediate input is inputted into the electric blower. When taps 1e and 1f are selected, which will be referred to as tap C hereinafter, a high input is inputted into the electric blower.

In Embodiment 1, tap B is arranged between taps A and C. That is, the third tap (tap B) is provided between the first tap (tap A) and the second tap (tap C).

Although taps A, B and C described above are switched by switching section 3, switches are connected to the respective taps. In the case of Embodiment 1, switch 2i is made to correspond to tap 1c. In the same manner, switches 2j, 2k, 21, 2m and 2n are respectively made to correspond to taps 1d, 1e, 1f, 1g and 1h.

In this case, switches 2i and 2n, switches 2j and 2m, and switches 2k and 2l are simultaneously turned on and off being linked so that the tap combinations of taps A, B and C can be simultaneously turned on and off.

Concerning the specific switching method conducted by these switches 2i to 2n, for example, the following method is provided. Switches, in which mechanical contacts are turned on and off like micro-switches, are used, and taps A, B and C are changed over being driven in the combinations described above. In this case, switching drive sections 2o, 2p, 2q simultaneously turn on and off switches 2i and 2n, switches 2j and 2m, and switches 2k and 2l respectively.

It is possible to consider a method in which the switches are electrically turned on and off like a bi-directional thyristor. In this case, micro-computers can be employed for switching drive sections 2o, 2p and 2q. In Embodiment 1, micro-switches are used for the switches.

Next, after either tap A, B or C of electric blower 1 has been selected by switching section 3, electric blower 1 is driven by electric blower drive section 2r, 2s, 2t through the selected tap. In Embodiment 1, as shown in Fig. 2, in order to continuously change the input from the low input to the high input, the bi-directional thyristor is used for the circuit element for driving. Concerning the input selecting section 4, a slide resistor and others are used, so that a user can select and adjust an intensity of the input (voltage).

In Embodiment 1, as the circuit, either tap A (the first tap) , tap C (the second tap) or tap C (the third tap) is selected, and electric blower 1 is driven by the circuit structure shown in Fig. 3. In the above circumstances, explanations are made below.

In Fig. 3, phase control section 11 for controlling electric blower 1 includes: diode AC switch 14 for determining a phase angle according to the voltage determined by condenser 12 and slide resistor 13; and bi-directional thyristor 15 for controlling the drive of electric blower 1 by the output of diode AC switch 14. Phase control section 11 for controlling electric blower 1 also includes commercial power source 5.

According to this circuit structure, when the resistance value of slide resistor 13, which is input selecting section 4, is adjusted from a high to a low value, the input to electric blower 1 is gradually increased. On the contrary, when the resistance value of slide resistor 13 is adjusted from a low to a high value, the input to electric blower 1 is gradually decreased. In this case, when the input is maximized at the time of selecting tap A, switches 2i to 2n are driven and the tap is switched to tap B. After the tap has been switched, when the resistance value of the slide resistor of the input selecting section 4 is increased higher than the resistance value before the tap is switched, the resistance value is set so that the input before switching the tap and the input after switching the tap can be made to equal to each other. The resistance value is gradually decreased from here, and when the input to tap B is maximized, the tap is switched to tap C. After that, the same operation as that described before is conducted.

When the above operation is conducted, suppose that the input into the vacuum cleaner of Embodiment 1 is the maximum electric power consumption as shown in Fig. 2, for example, 1800 W. In the case where the electric blower having taps used for the present invention is not used, when an electric blower, the maximum input of which is 1800 W, is driven while phase control shown in Fig. 4 is being conducted, as shown in Fig. 5, when the phase to drive electric blower 1 is approximately 90°, an intensity of the current flowing in electric blower 1 is increased and an intensity of the higher harmonic current is also increased, and it becomes impossible for the current to satisfy the predetermined standard current S0 shown by the broken line in the drawing. In Fig. 5, it is shown that an intensity of the predetermined standard current is 2.3 A. Accordingly, when the higher harmonic current satisfys the predetermined standard, the current flowing in the electric motor is not more than 2.3 A.

In taps B and C shown in Fig. 4, TP1 and TP2, which are shown by the broken lines, show the ranges of the input and phase in which the high harmonic current exceeds the predetermined standard value. It shows that the higher harmonic current exceeds the predetermined standard value (2.3 A) when the phase is approximately 90° in any of taps B and C.

Fig. 5 does not show a characteristic of the specific tap in taps A to C. Fig. 5 is a characteristic diagram in which the maximum value in the higher harmonic currents of taps A to C is plotted.

When an input is set at each tap as shown in Fig. 2, a higher harmonic current is generated with respect to the phase as shown in Fig. 4.

The relation between the phase and the input for each tap is shown in Fig. 4. A portion (shown by the broken line) shown by SO in Fig. 4 is a range in which the higher harmonic current exceeds the predetermined standard value (2.3 A). In view of the characteristic shown in Fig. 4, in the range of a low input, tap A is used and electric blower 1 is driven. Next, when the maximum input is given to tap A, the tap is switched to tap B (shown by reference mark AB in Fig. 4), and electric blower 1 is driven by the same phase at which the input becomes the same value as the maximum input value of tap A. In the same manner, when the maximum input is given to tap B, the tap is switched to tap C (shown by reference mark BC in Fig. 4). When the above operation and action are conducted as described above, electric blower 1 is driven while the higher harmonic current is being maintained in the predetermined standard range. Due to the foregoing, in input regions TP1, TP2 in which the higher harmonic current exceeds the predetermined standard value, the operation is temporarily shut off so that a current can not flow into electric blower 1.

In the case where the performance of the vacuum cleaner is enhanced by increasing the input given to electric blower 1, there is a possibility that the higher harmonic current can not satisfy the predetermined standard in a portion in which the tap is switched. In this case, in the portion in which the higher harmonic current can not satisfy the predetermined standard, the higher harmonic current may be suppressed to be a value not more than the predetermined value (2 . 3 A) by employing various devices and means in such a manner that the phase is changed for each 1 Hz so as to suppress the higher harmonic current in the same manner as that conducted in the conventional example.

### (EMBODIMENT 2)

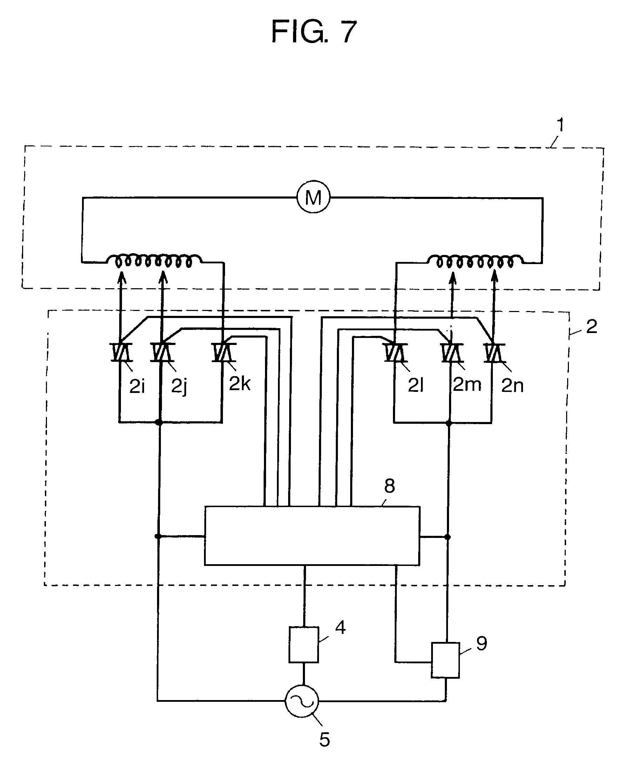

Referring to Figs. 7 and 8 and Fig. 4, Embodiment 2 of the present invention will be explained below. Like reference characters are used to indicate like parts in Embodiments 1 and 2.

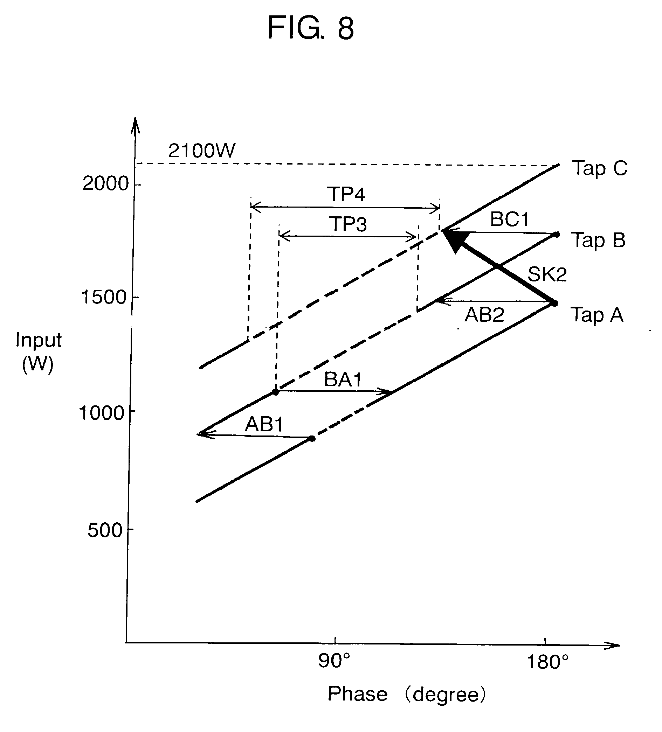

Fig. 7 is a circuit block diagram, and Fig. 8 is a characteristic diagram showing a relation between the phase and the input impressed upon the electric blower in the case where the electric blower capable of switching the taps is used.

In Fig. 7, the electrical equipment of the present invention includes: electric blower 1, drive section 2, input selecting section 4, and commercial power source 5. Drive section 2 has both functions of a switch and a drive section. The electrical equipment of the present invention further includes: control section 8 for controlling drive section 1, and current detecting section 9 for detecting an intensity of the current flowing in electric blower 1 via drive section 2.

Concerning the vacuum cleaner composed as described above, the operation will be explained as follows. As shown in Embodiment 1, in order to change the input of electric blower 1 by switching taps A, B and C, drive section 2 employs bi-directional thyristors 2i to 2n which are used as the switching elements. Bi-directional thyristors 2i to 2n also have a function as the electric blower drive section. When taps A, B and C are selected in Embodiment 2, the thyristors are selected as follows. When tap A is selected, bi-directional thyristors 2i and 2n are selected. When tap B is selected, bi-directional thyristors 2j and 2m are selected. When tap C is selected, bi-directional thyristors 2k and 21 are selected.

When bi-directional thyristors 2i to 2n are driven by operating input selecting section 4, the phase is changed so that the input to electric blower 1 can be increased. When the input is maximized, bi-directional thyristors 2i to 2n are driven being controlled so that tap B can be selected. In the same manner, bi-directional thyristors 2i to 2n are driven being controlled so that tap C can be selected. Due to this control, in the same manner as that of Embodiment 1, it is possible to conduct control shown in Fig. 4. At this time, since the number of parts used for selecting section 4 can be decreased, the manufacturing cost of the circuit structure of the entire electrical equipment can be reduced.

In the input region in which the higher harmonic current can not satisfy the predetermined standard range, when the impression of an input upon electric blower 1 is skipped, the higher harmonic current can satisfy the predetermined standard range. For example, in the structure shown in Fig. 7, tap B is not provided, and electric blower 1 is composed of tap A (the first tap) and tap C (the second tap). Alternatively, even when tap B (the third tap) is provided between taps A and C, tap B is set as a tap not to be selected and the impression of an input upon tap B is skipped (reference mark SK1).

In this case, referring to Fig. 4, Embodiment 2 will be explained below. When operation is conducted in such a manner that tap A is controlled so that the maximum input can be given to it and then the tap is switched to tap C, the region, in which the input value to tap C is from 1200 W to 1450 W, is a region in which the higher harmonic current can not be satisfied. At this time, driving is conducted by tap A from 300 W to 1200 W. Next, driving is conducted by tap C from 1450 W to 1800 W. That is, in the input region in which the higher harmonic current can not satisfy the predetermined standard value, the impression of an input upon electric blower 1 is stopped. In the above constitution, the impression of an input to the electric blower 1 is skipped (SK) from 1200 W of tap A to 1450 W of tap C. When the above drive control is conducted, it becomes impossible to more smoothly change over the input, however, no problems are caused in the practical use of the vacuum cleaner.

When the input is impressed upon electric blower 1 stepwise, that is, when the input is linearly impressedupon electric blower 1, it is possible to operate electric blower 1 while the higher harmonic current is always flowing in electric blower 1 under a satisfactory condition. For example, in the case where intensities of the input to be selected by input control section 4 are 300 W, 1000 W, 1450 W and 1800 W, it is composed so that tap A can select 300 W and 1000 W and tap B or C can select 1450 W and finally tap C can select 1800 W.

Suppose that electric blower 1 is provided here in which the input of each tap of electric blower 1 can be increased to 2100 W at maximum. In the case where a relation between the phase for each tap of electric blower 1 and the range, in which the higher harmonic current can not satisfy, exists as shown in Fig. 8, the taps are switched from tap A to tap B (AB1). Next, the taps are switched from tap B to tap A (BA1). Next, the taps are switched from tap A to tap B (AB2). Next, the taps are switched from tap B to tap C (BC1).

In taps B and C, TP3 and TP4 expressed by the broken lines show a state in which the higher harmonic current exceeds the predetermined standard value, that is, TP3 and TP4 are input regions in which the higher harmonic current does not satisfy the predetermined standard value. When the taps are switched in this way, the current flowing in the electric motor is shut off in the input region in which the higher harmonic current exceeds the predetermined standard value, that is, the current flowing in the electric motor is shut off in input regions TP3 and TP4. Due to the foregoing, even when an intensity of the input to electric blower 1 is increased, an intensity of the higher harmonic current can be suppressed to a value not more than the predetermined value. In Fig. 8, it is possible to directly skip (SK2) from tap A to tap C without selecting tap B in the same manner as that shown in Fig. 4.

Next, in the case of switching the taps, it is possible to consider the occurrence of a case in which even when the phases are set so that the inputs can agree with each other before and after switching the tap, a difference is made between the input values due to the fluctuation of the length of the windings wound round the stators of electric blower 1. In this case, the following constitution is employed. A current flowing in electric blower 1 before the tap is switched and a current flowing in electric blower 1 after the tap has been switched are detected, and the phases are made to agree with each other by providing an adjustment section in the control section 8 so that the respective current values can be equal to each other. Due to the foregoing, it is possible to exclude a large difference of the input given to electric blower 1 generated at the time of switching the taps, and the operation can be smoothly conducted. When a current value flowing in electric blower 1, which is being operated, is detected by providing the current detecting section 9, it is possible to appropriately find an abnormal state such as a short circuit, and the safety can be enhanced.

### (EMBODIMENT 3)

Referring to Fig. 9, Embodiment 3 of the present invention will be explained below. Like reference characters are used to indicate like parts in Embodiments 1 to 3, and explanations are omitted here.

Fig. 9 is a circuit block diagram of Embodiment 3 of the present invention. In electric blower 1 of Embodiment 3, a winding of common line 22 is wound on one side of stator 21, and a tap is taken out from a portion of the winding. Tap 23 capable of taking out a low input is drawn out from the same stator 21. The winding wound round stator 21 is extended to another stator 24, and tap 25 is drawn out at the end.

Although the input to the electric blower is conventionally taken out by a pair of taps, when this constitution is adopted, it becomes possible to take out the input from common line 22 and taps 23, 25 corresponding to the input. When a plurality of taps are taken out from the middle of the winding from which tap 23 or 25 capable of taking out each output is taken out, it is possible to provide an electric blower capable of selecting a plurality of inputs.

In the constitution shown in Embodiment 3, a plurality of windings are wound round one of the stators, and a plurality of taps are drawn out from the windings. There is provided an electric motor in which the input can be changed when the taps are switched. There is provided a drive section for driving the electric motor for each tap. There is provided a switching section for selecting the taps. The drive section is operated so that the higher harmonic current flowing in the electric blower in each input region can be in the range of the higher harmonic current of the predetermined standard. There is provided electrical equipment in which when the higher harmonic current deviates from the range of the predetermined standard, the tap is switched to another tap so as to operate in another input region.

When the above electric blower is used, even when the number of circuit elements, which are provided in the switching section and the electric blower drive section arranged in drive section 2 , is reduced, the same operation as that explained in Embodiment 2 can be satisfactorily conducted. Due to the foregoing, the drive circuit composing section of the electrical equipment can be simplified, and the manufacturing cost can be reduced. Since the number of parts can be decreased, the degree of freedom of designing the circuit board, on which the circuit elements are mounted, can be enhanced.

### INDUSTRIAL APPLICABILITY

According to the electrical equipment of the present invention, the generation of a higher harmonic current can be suppressed, and it is possible to conduct controlling with less vibration. Therefore, the commodity value of the electrical equipment can be enhanced. Further, the electrical equipment can cope with an enhancement of the performance brought about by the higher input.

When controlling is conducted as described in the present invention, it is possible to suppress an intensity of the higher harmonic current. Therefore, as long as it is electrical equipment used for a device except for a vacuum cleaner, for example, as long as it is electrical equipment used for an electric washing machine or a clothing drier, the present invention can be applied to any electrical equipment. Therefore, its industrial applicability is high.

## Claims

1. Electrical equipment comprising:
an electric motor in which a plurality of intermediate taps are drawn out from a stator and an input to the electric motor is changed by switching the taps;
a drive section for driving the electric motor at each tap; and
a switching section for selecting the taps, wherein
the drive section is capable of arbitrarily changing an input to the electric motor in an input region determined by a pair of taps selected by the switching section so that the input value of the electric motor can be changed in all output regions of the electric motor.

2. The electrical equipment of claim 1, wherein the drive section makes the electric motor operate in a region in which a higher harmonic current of the electric motor is in a range of a predetermined standard value in each input region selected by switching the taps, and the drive section makes the electric motor operate in another input region by switching the taps in a region in which the higher harmonic current of the electric motor exceeds the range of the predetermined standard value.

3. The electrical equipment of claim 1, wherein the drive section changes stepwise an electric motor input value in each input region selected by switching the taps.

4. The electrical equipment of claim 1, wherein when an electric motor input value is changed by phase control in an input region selected by switching the taps, in a region in which a higher harmonic current can not satisfy a predetermined standard, the input is skipped only in the region.

5. The electrical equipment of claim 1, wherein when an electric motor input value is changed by phase control in an input region selected by switching the taps, in a region in which a higher harmonic current can not satisfy a predetermined standard, the taps are switched in the region so as to select another input region and make the electric blower operate.

6. The electrical equipment of claim 1, further comprising:
a current detecting section for reading in a current flowing in the electric motor in an input region selected by the switching section of switching the taps; and
an adjusting section for adjusting a current so that a difference in the input generated by the fluctuation of the input region at the time of switching the taps can be minimized, wherein
the fluctuation is suppressed by an adjustment conducted by the adjusting section.

7. The electrical equipment of claim 1, further comprising;
a current detecting section; and
a wire breaking detecting section for judging the breaking of wire of the electric motor by a current detected by the current detecting section.

8. Electrical equipment comprising:
an electric motor in which a plurality of windings are wound round one of the stators, a plurality of taps are drawn out from the windings and an input is changed by switching the taps;
a drive section for driving the electric motor for each tap; and
a switching section for selecting the taps, wherein
the drive section drives the electric motor in a region, in which a higher harmonic current is in a range of a predetermined standard value, in each input region, and in a region in which the higher harmonic current exceeds the range of the predetermined standard value, the drive section operates the electric motor in another input region by switching the taps.

9. The electrical equipment of claim 8, wherein the drive section changes stepwise an electric motor input value in each input region selected by switching the taps.

10. The electrical equipment of claim 8, further comprising:
a phase control section, wherein
when the drive section changes an electric motor input value by phase control in an input region selected by switching the taps, in a region in which a higher harmonic current flowing in the electric motor does not satisfy a predetermined standard, the inputting operation is skipped only in the region.

11. The electrical equipment of claim 8, further comprising:
a phase control section, wherein
when the drive section changes an electric motor input value by phase control in an input region selected by switching the taps, in a region in which a higher harmonic current flowing in the electric motor does satisfy a predetermined standard, the tap is switched in the region so as to select another input region and conduct operation.

12. The electrical equipment of claim 8, further comprising:
a current detecting section for reading in a current flowing in the electric motor in an input region selected by the switching section of switching the taps; and
an adjusting section for adjusting a current so that a difference in the input generated by the fluctuation of each input region at the time of switching the taps can be minimized, wherein
the fluctuation is suppressed by an adjustment conducted by the adjusting section.

13. The electrical equipment of claim 8, further comprising;
a current detecting section; and
a wire breaking detecting section for judging the breaking of wire of the electric motor by a current detected by the current detecting section.
